# EUROPEAN PATENT SPECIFICATION

(11) **EP 3 553 354 B1**
(45) Date of publication and mention of the grant of the patent: **09.12.2020**
(21) Application number: 18166984.7
(22) Date of filing: 12.04.2018
(51) Int. Cl.: B05B 1/30

(54) **CONTROL STRUCTURE CAPABLE OF ADJUSTING WATER VOLUME AND CONTROLLING WATER SUPPLY**
STEUERUNGSSTRUKTUR ZUR EINSTELLUNG DER WASSERMENGE UND STEUERUNG DER WASSERZUFUHR
STRUCTURE DE COMMANDE CAPABLE D'AJUSTER LE VOLUME D'EAU ET DE COMMANDER L'ALIMENTATION EN EAU

(43) Date of publication of application: 16.10.2019
(73) Proprietor: Yuan Mei Corp., Chang Hua Hsien (TW)
(72) Inventor: Cheng, Chi-Han, Chang Hua Hsien (TW)
(74) Representative: Boult Wade Tennant LLP

(56) References cited:
- US-A- 2 568 515
- US-A- 2 697 638
- US-A1- 2011 114 865

## Description

### TECHNICAL FIELD

The present disclosure relates to a control structure which is capable of adjusting water volume and controlling the water supply easily.

### BACKGROUND

A conventional watering tool (such as a sprinkler, a water spray gun or a water supply pipe) adjusts its water volume from a supply end of the watering tool. For example, when water from an outflow end of the watering tool is too large or small, the water volume of the water is adjustable from the supply end of the watering tool, thus having inconvenient adjustment. Furthermore, when an adjuster is fixed with the watering tool, the water volume of the water is adjustable by operating the adjuster with a tool, such as a bolt, thus having troublesome operation.

US 2 697 638 A discloses a combined nozzle and hose coupling wherein the nozzle functions as a valve to regulate the flow of water through or to completely cut off the flow.

### SUMMARY

A primary aspect of the present invention is to provide a control structure which is capable of adjusting water volume and controlling the water supply easily.

To obtain the above-mentioned aspect, a control structure is provided according to claim 1. An exemplary control structure contains: a body, a fixer, a valve stem, an adjuster, and a controller.

The body includes a water outflow segment formed on a first end of the body and configured to connect with a watering tool, an accommodation groove configured to accommodate a fixer and a valve stem. The fixer includes a retaining rib arranged around an inner wall of the fixer. The valve stem includes an inlet defined in the valve stem and communicating with the water outflow segment of the body, a fixing rib arranged on a first end of the valve stem, an opening formed on a second end of the valve stem and communicating with the inlet, and a guiding column extending outward from a side of the opening. A diameter of the guiding column is less than the opening, and the guiding column has a seal ring fitted thereon. The fixing rib of the valve stem retains with the retaining rib of the fixer so as to limit a rotation of an adjuster along the body. The adjuster includes a threaded orifice screwing with a screwing section on arranged an outer wall of the controller, an inflow aperture formed on a middle section of an inner wall of the controller and fitting with the guiding column, and a shoulder formed beside the inflow aperture, wherein the controller is coupled with a water supply pipe.

When the water from the water supply pipe is too large or small, the adjuster is rotated clockwise along the accommodation groove and the connection section of the body so that the threaded orifice of the adjuster drives the screwing section of the controller to remove, and the inflow aperture detaches from the two first seal rings of the guiding column, hence the water flows into the inlet from the opening of the valve stem and sprays out of the watering tool from the water outflow segment of the body. The adjuster is rotated continuously so as to increase a distance between the inflow aperture of the controller and the valve stem and to increase water volume. When the adjuster is rotated counterclockwise to drive the controller to move toward the guiding column, a distance between the inflow aperture of the controller and the guiding column decrease, such that the water column decreases. When the inflow aperture contacts with the second seal ring of the valve stem, the water stops flowing. In addition, the adjuster is limited by the valve stem 40 to rotate on an original position and to drive the controller to move forward and backward, thus changing the water volume easily.

Other objects and features will be in part apparent and in part pointed out hereinafter.

### BRIEF DESCRIPTION OF THE DRAWINGS

FIG. 1 is a perspective view showing exploded components of a control structure according to a preferred embodiment of the present invention.
FIG. 2 is a cross-sectional perspective view showing the assembly of a body of the control structure according to the preferred embodiment of the present invention.
FIG. 3 is a cross-sectional perspective view showing the assembly of a retainer of the control structure according to the preferred embodiment of the present invention.
FIG. 4 is a cross-sectional perspective view showing the assembly of a valve stem of the control structure according to the preferred embodiment of the present invention.
FIG. 5 is a cross-sectional perspective view showing the assembly of an adjuster of the control structure according to the preferred embodiment of the present invention.
FIG. 6 is a cross-sectional perspective view showing the assembly of a controller of the control structure according to the preferred embodiment of the present invention.
FIG. 7 is a perspective view showing the assembly of the control structure according to the preferred embodiment of the present invention.
FIG. 8 is a cross sectional view showing the operation of the control structure according to the preferred embodiment of the present invention.
FIG. 9 is another cross sectional view showing the operation of the control structure according to the preferred embodiment of the present invention.

Corresponding reference characters indicate corresponding parts throughout the drawings.

### DETAILED DESCRIPTION

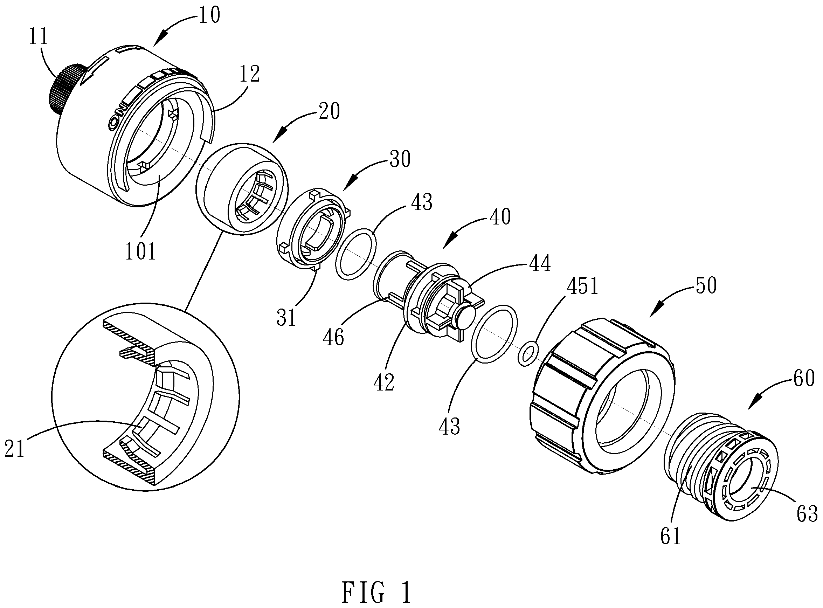

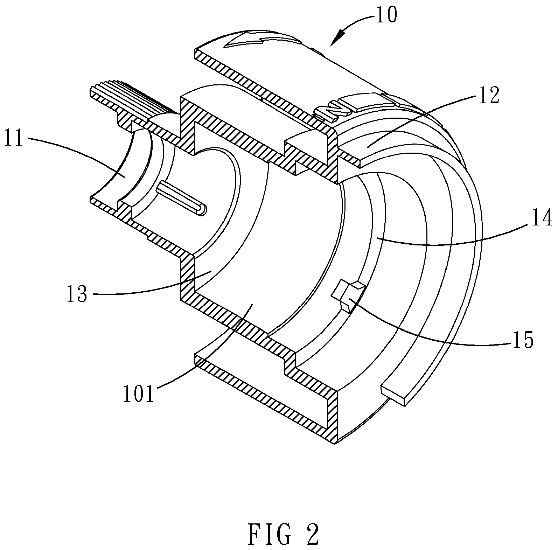

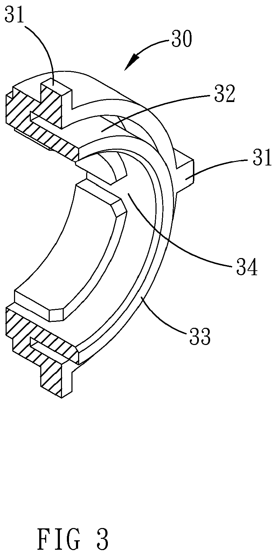

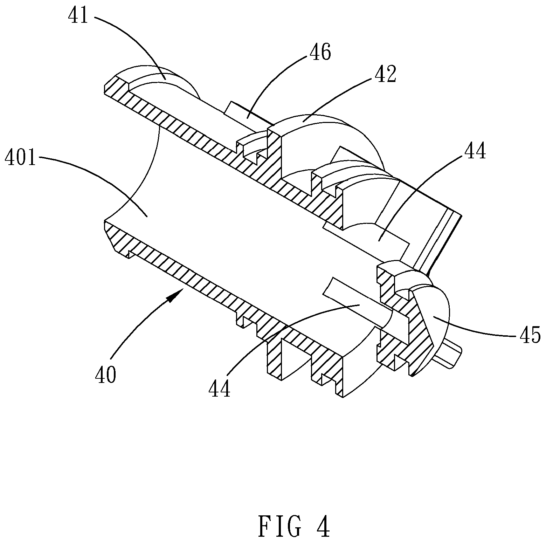

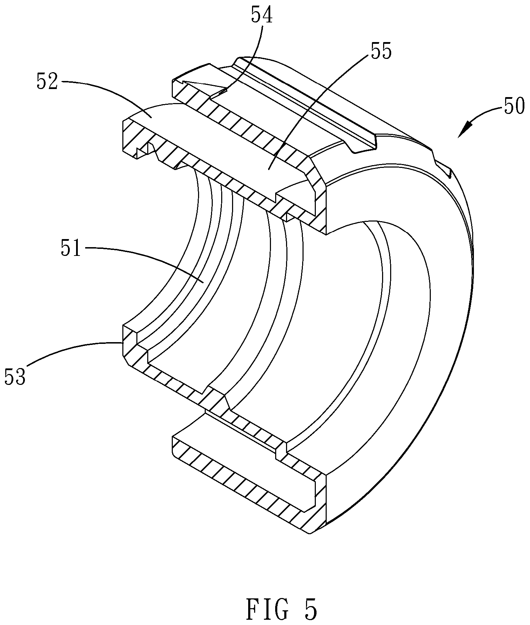

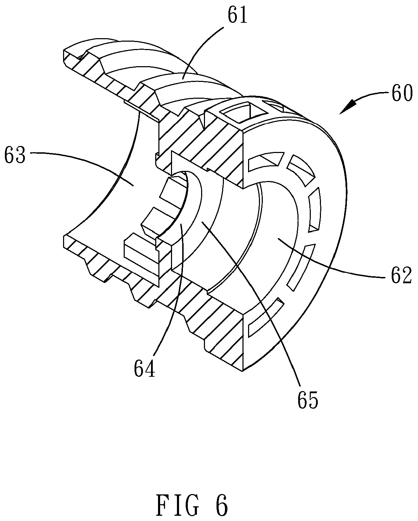

With reference to FIGS. 1 to 6, a control structure capable of adjusting water volume and controlling water supply according to a preferred embodiment of the present invention comprises: a body 10, a fixer 20, a retainer 30, a valve stem 40, an adjuster 50, and a controller 60.

The body 10 includes an accommodation groove 101 defined therein, a water outflow segment 11 formed on a first end of the body 10 and configured to connect with a watering tool (such as a sprinkler, a water spray gun or a water supply pipe), a connection section 12 formed on a second end of the body 10. In an embodiment, a diameter of the outflow segment 11 is less than the connection section 12. The body 10 further includes a first shoulder 13 and a second shoulder 14 which are defined on an inner wall of the accommodation groove 101, and multiple locking recesses 15 defined on the second shoulder 14. The fixer 20 is tubular and includes a flexible retaining rib 21 arranged around an inner wall of the fixer 20. The retainer 30 includes a plurality of first engagement blocks 31 extending outward from an outer wall of the retainer 30, a first fitting section 32 formed on a first end of the retainer 30, a stop rib 33 formed on the first fitting section 32, and a trench 34 defined on an inner wall of the retainer 30.

In an embodiment, a diameter of the first end of the retainer 30 is less than a second end of the retainer 30. The valve stem 40 includes an inlet 401 defined therein, a fixing rib 41 arranged on a first end of the valve stem 40, an abutting rib 42 extending outward from a middle section of an outer wall of the valve stem 40, two first seal rings 43 fitted on two sides of the abutting rib 42 respectively, an opening 44 separated by a cross-shaped partition on a second end of the valve stem 40 and communicating with the inlet 401, and a conical guiding column 45 extending outward from a side of the opening 44. A diameter of the guiding column 45 is less than the opening 44 in an embodiment, and the guiding column 45 has a second seal ring 451 fitted thereon.

The valve stem 40 further includes a plurality of second engagement blocks 46 extending around an outer wall of the valve stem 40. The adjuster 50 includes a coupling section 52 having a threaded orifice 51, a contacting face 53 extending inward from a first end of the adjuster 50, and a second fitting section 54 extending adjacent to the coupling section 52. In an embodiment, a diameter of the second fitting section 54 is more than the coupling section 52. The adjuster 50 further includes a housing space 55 defined between the coupling section 52 and the second fitting section 54. The controller 60 includes a screwing section 61 arranged on an outer wall thereof, an inflow aperture 64 formed on a middle section of an inner wall of the controller 60, a third shoulder 65 formed beside the inflow aperture 64 and adjacent to a first end of the controller 60, a joining section 62 arranged on the inner wall of the controller 60 proximate to the first end of the controller 60, an inlet segment 63 arranged on the inner wall of the controller 60 adjacent to a second end of the controller 60 and connected with a water hose (not shown).

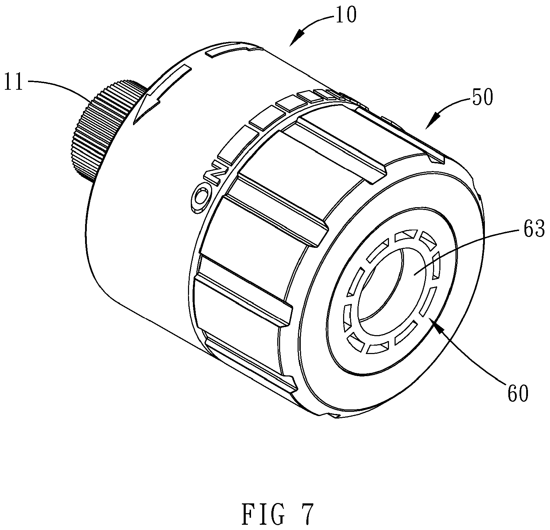

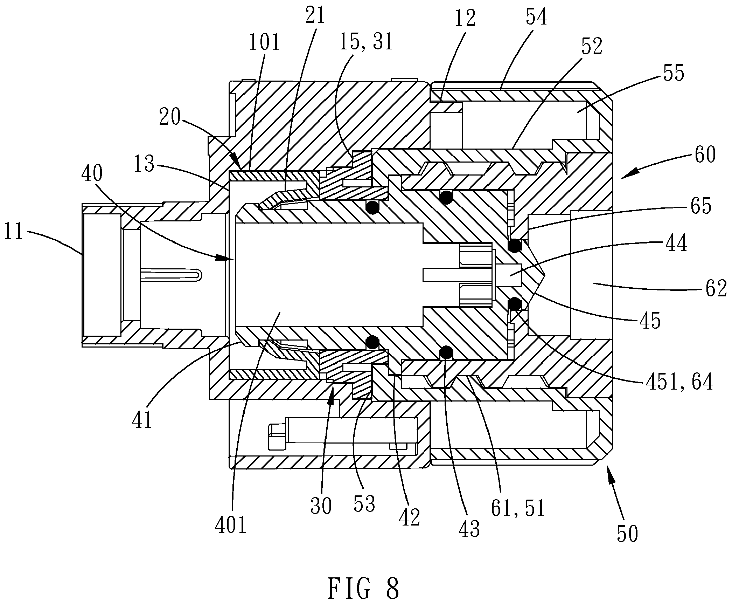

Referring to FIGS. 7 and 8, in assembly, the fixer 20 and the retainer 30 are accommodated in the accommodation groove 101 of the body 10 so that the fixer 20 abuts against the first shoulder 13, and the plurality of first engagement blocks 31 are retained in the multiple locking recesses 15 respectively. The fixer 20 and the retainer 30 are adhered with the body 10 in a ultrasonic bonding manner, and the coupling section 52 of the adjuster 50 is fitted into the accommodation groove 101 of the body 10 so as to abut against the plurality of first engagement blocks 31 and the second shoulder 14, the contacting face 53 connects with the first fitting section 32 and flushes with the stop rib 33, and the connection section 12 of the body 10 is located in the housing space 55 and is fitted with the second fitting section 54. Thereafter, the plurality of second engagement blocks 46 of the valve stem 40 are pushed into the fixer 20 from the threaded orifice 51 of the adjuster 50 along the trench 34 of the retainer 30 so that the fixing rib 41 retains with the flexible retaining rib 21 of the fixer 20, hence the plurality of second engagement blocks 46 are locked in the trench 34, the abutting rib 42 abuts against the contacting face 53 of the adjuster 50 and the first fitting section 32 of the retainer 30, and the contacting face 53 contacts with the second shoulder 14 of the body 10 and the abutting rib 42 of the valve stem 40 and rotates along the accommodation groove 101 and the connection section 12 clockwise or counterclockwise. The screwing section 61 of the controller 60 is screwed into the guiding column 45 of the valve stem 40 along the threaded orifice 51 of the adjuster 50 and extends out of the inflow aperture 64. In the meantime, the third shoulder 65 is biased against the valve stem 40 so as to stop the controller 60, and the joining section 62 is fitted on the valve stem 40. Preferably, the two first seal rings 43 and the second seal ring 451 respectively contact with the retainer 30, the joining section 62, and the inflow aperture 64 so as to stop water flowing from the opening 44.

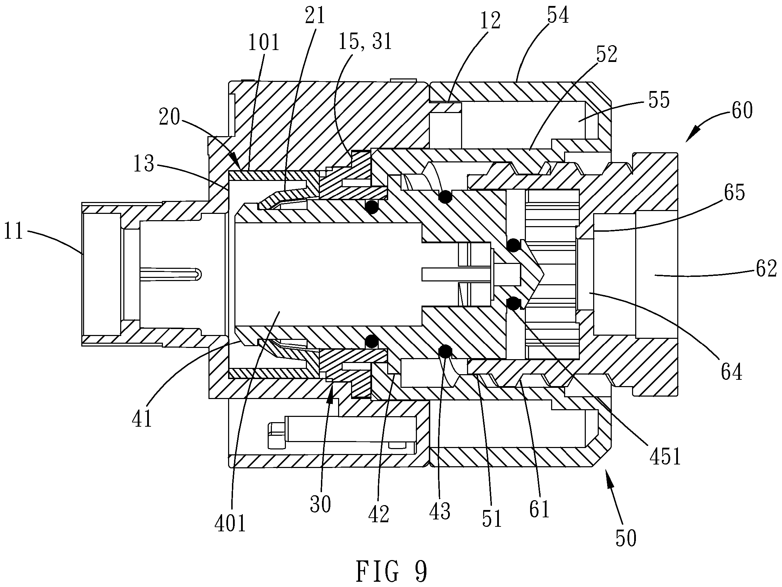

As shown in FIG. 9, in application, a water supply pipe (not shown) is in connection with the inlet segment 63 of the controller 60, and the sprinkler, the water spray gun or a water hose is coupled with the water outflow segment 11 of the body 10. When the water from the water supply pipe is too large or small, the adjuster 50 is rotated clockwise along the accommodation groove 101 and the connection section 12 of the body 10 so that the threaded orifice 51 of the adjuster 50 drives the screwing section 61 of the controller 60 to remove, and the inflow aperture 64 detaches from the two first seal rings 43 of the guiding column 45, hence the water flows into the inlet 401 from the opening 44 of the valve stem 40 and sprays out of the watering tool from the water outflow segment 11 of the body 10. The adjuster 50 is rotated continuously so as to increase a distance between the inflow aperture 64 of the controller 60 and the valve stem 40 and to increase water volume. When the adjuster 50 is rotated counterclockwise to drive the controller 60 to move toward the guiding column 45, a distance between the inflow aperture 64 of the controller 60 and the guiding column 45 decrease, such that the water column decreases. When the inflow aperture 64 contacts with the second seal ring 451 of the valve stem 40, the water stops flowing. Thereby, the control structure is capable of adjusting water volume and controlling the water supply easily. In addition, the adjuster 50 is limited by the valve stem 40 to rotate on an original position and to drive the controller 60 to move forward and backward, thus changing the water volume easily.

Note that the specifications relating to the above embodiments should be construed as exemplary rather than as limitative of the present invention, with many variations and modifications being readily attainable by a person of average skill in the art without departing from the scope thereof as defined by the appended claims and their legal equivalents.

Having described the invention in detail, it will be apparent that modifications and variations are possible without departing from the scope of the invention defined in the appended claims.

When introducing elements of the present invention or the preferred embodiments thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above constructions, products, and methods without departing from the scope of the appended claims,

## Claims

1. A control structure capable of adjusting water volume and controlling water supply comprising:
a fixer (20) comprising a retaining rib (21) arranged around an inner wall of the fixer (20);
a valve stem (40) comprising:
an inlet (401) defined in the valve stem (40),
a fixing rib (41) arranged on a first end of the valve stem (40),
an opening (44) formed on a second end of the valve stem (40), the opening (44) formed on the second end of the valve stem (40) communicating with the inlet (401), and
a guiding column (45) extending outward from a side of the opening (44), the guiding column (45) having a diameter less than a diameter of the opening (44) and having a seal ring fitted (451) thereon;
a body (10) comprising:
a water outflow segment (11) formed on a first end of the body (10) and configured to connect with a watering tool, and
an accommodation groove (101) configured to accommodate the fixer (20) and the valve stem (40), the valve stem (40) communicating with the water outflow segment (11) of the body (10);
a controller (60) for coupling with a water supply pipe, the controller (60) comprising:
a screwing section (61) arranged on an outer wall of the controller (60),
an inflow aperture (64) formed on a middle section of an inner wall of the controller (60), and
a shoulder (65) formed beside the inflow aperture (64); and
an adjuster (50) comprising a threaded orifice (51) screwing with the screwing section (61) of the controller (60) and fitting with the guiding column (45), wherein the fixing rib (41) of the valve stem (40) retains with the retaining rib (21) of the fixer (20) so as to limit a rotation of the adjuster (50) along the body (10).

2. The control structure as claimed in claim 1, wherein the body (10) includes:
a connection section (12) formed on a second end thereof and configured to fit with the adjuster (50), and
a first shoulder (13) and a second shoulder (14) which are defined on an inner wall of the accommodation groove (101), wherein the first shoulder (13) abuts against the fixer (20), and multiple locking recesses (15) are defined on the second shoulder (14) of the body (10) and are configured to retain with a plurality of first engagement blocks (31) of the retainer (30) respectively.

3. The control structure as claimed in any preceding claim, further comprising a retainer (30) comprising:
a first fitting section (32) formed on a first end thereof,
a stop rib (33) formed on the first fitting section (32), and
a trench (34) defined on an inner wall of the retainer (30), wherein a diameter of the first end of the retainer (30) is less than a second end of the retainer (30), and the trench (34) locks with a plurality of second engagement blocks (46) of the valve stem (40).

4. The control structure as claimed in any preceding claim, wherein the valve stem (40) includes:
an abutting rib (42) extending outward from a middle section of an outer wall of the valve stem (40), and
two first seal rings (43) fitted on two sides of the abutting rib (42) respectively.

5. The control structure as claimed in any preceding claim, wherein the adjuster (50) includes:
a coupling section (52),
a contacting face (53) extending inward from an end of the adjuster (50),
a second fitting section (54) extending adjacent to the coupling section (52),
wherein a diameter of the second fitting section (54) is more than the coupling section (52), and
a housing space (55) defined between the coupling section (52) and the second fitting section (54).

6. The control structure as claimed in any preceding claim, wherein the fixer (20) and the retainer (30) are adhered with the body (10) in an ultrasonic bonding manner.

7. The control structure as claimed in any preceding claim, wherein the retaining rib (21) is flexible.

8. The control structure as claimed in any preceding claim, wherein the opening (44) is separated by a cross-shaped partition on the second end of the valve stem (40).

9. The control structure as claimed in any preceding claim, wherein the guiding column (45) is conical.

## Patentansprüche

1. Steuerungsstruktur zur Einstellung der Wassermenge und Steuerung der Wasserzufuhr, umfassend:
einen Fixierer (20), der eine um eine Innenwand des Fixierers (20) herum angeordnete Halterippe (21) umfasst;
einen Ventilstamm (40), umfassend:
einen in dem Ventilstamm (40) definierten Einlass (401),
eine an einem ersten Ende des Ventilstamms (40) angeordnete Fixierrippe (41),
eine an einem zweiten Ende des Ventilstamms (40) ausgebildete Öffnung (44), wobei die an dem zweiten Ende des Ventilstamms (40) ausgebildete Öffnung (44) mit dem Einlass (401) kommuniziert, und
eine Führungssäule (45), die sich von einer Seite der Öffnung (44) nach außen erstreckt, wobei die Führungssäule (45) einen Durchmesser aufweist, der kleiner ist als ein Durchmesser der Öffnung (44), und auf der ein Dichtungsring (451) angebracht ist;
einen Körper (10), umfassend:
ein Wasserausflusssegment (11), das an einem ersten Ende des Körpers (10) ausgebildet und konfiguriert ist, um mit einem Bewässerungswerkzeug verbunden zu werden, und
eine Aufnahmenut (101), die zur Aufnahme des Fixierers (20) und des Ventilstamms (40) konfiguriert ist, wobei der Ventilstamm (40) mit dem Wasserausflussabschnitt (11) des Körpers (10) kommuniziert;
eine Steuerung (60) zur Kopplung mit einem Wasserzufuhrrohr, wobei die Steuerung (60) umfasst:
einen Verschraubungsabschnitt (61), der an einer Außenwand der Steuerung (60) angeordnet ist,
eine Einströmöffnung (64), die in einem mittleren Abschnitt einer Innenwand der Steuereinheit (60) ausgebildet ist, und
eine Schulter (65), die neben der Einströmöffnung (64) ausgebildet ist; und
einen Regler (50), der eine Gewindeöffnung (51) umfasst, die mit dem Schraubabschnitt (61) der Steuerung (60) verschraubt ist und mit der Führungssäule (45) zusammenpasst, wobei die Fixierrippe (41) des Ventilstamms (40) mit der Halterippe (21) des Fixierers (20) festgehalten wird, so dass eine Drehung des Reglers (50) entlang des Körpers (10) begrenzt wird.

2. Steuerungsstruktur nach Anspruch 1, wobei der Körper (10) umfasst:
einen Verbindungsabschnitt (12), der an einem zweiten Ende davon ausgebildet und zum Passen auf den Regler (50) konfiguriert ist, und
eine erste Schulter (13) und eine zweite Schulter (14), die an einer Innenwand der Aufnahmenut (101) definiert sind, wobei die erste Schulter (13) gegen den Fixierer (10) stößt und mehrere Arretierausnehmungen (15) an der zweiten Schulter (14) des Körpers (10) definiert und zum Festhalten mit einer Vielzahl von ersten Eingriffsblöcken (31) des Halters (30) konfiguriert sind.

3. Steuerungsstruktur nach einem der vorangehenden Ansprüche, ferner einen Halter (30) umfassend, umfassend:
einen ersten Passungsabschnitt (32), der an einem ersten Ende davon ausgebildet ist,
eine Anschlagrippe (33), die an dem ersten Passungsabschnitt (32) ausgebildet ist, und
eine Furche (34), die an einer Innenwand des Halters (30) definiert ist, wobei ein Durchmesser des ersten Endes des Halters (30) kleiner ist als ein zweites Ende des Halters (30) und die Furche (34) mit einer Vielzahl von zweiten Eingriffsblöcken (46) des Ventilstamms (40) arretiert ist.

4. Steuerungsstruktur nach einem der vorangehenden Ansprüche, wobei der Ventilstamm (40) umfasst:
eine Stoßrippe (42), die sich von einem mittleren Abschnitt einer Außenwand des Ventilstamms (40) nach außen erstreckt, und
zwei erste Dichtungsringe (43), die jeweils an zwei Seiten der Stoßrippe (42) angesetzt sind.

5. Steuerungsstruktur nach einem der vorangehenden Ansprüche, wobei der Regler (50) umfasst:
einen Kopplungsabschnitt (52),
eine Kontaktfläche (53), die sich von einem Ende des Reglers (50) nach innen erstreckt,
einen zweiten Passungsabschnitt (54), der sich angrenzend an den Kopplungsabschnitt (52) erstreckt,
wobei ein Durchmesser des zweiten Passungsabschnitts (54) größer ist als der Kupplungsabschnitt (52), und
einen Gehäuseraum (55), der zwischen dem Kopplungsabschnitt (52) und dem zweiten Passungsabschnitt (54) definiert ist.

6. Steuerungsstruktur nach einem der vorangehenden Ansprüche, wobei der Fixierer (20) und der Halter (30) mit dem Körper (10) in der Art einer Ultraschallverklebung verklebt sind.

7. Steuerungsstruktur nach einem vorangehenden Anspruch, wobei die Halterippe (21) flexibel ist.

8. Steuerungsstruktur nach einem vorangehenden Anspruch, wobei die Öffnung (44) durch eine kreuzförmige Teilung am zweiten Ende des Ventilstamms (40) aufgetrennt ist.

9. Steuerungsstruktur nach einem vorangehenden Anspruch wobei die Führungssäule (45) konisch ist.

## Revendications

1. Structure de commande capable d'ajuster un volume d'eau et de commander une alimentation en eau comprenant :
un dispositif de fixation (20) comprenant une nervure de retenue (21) agencée autour d'une paroi interne du dispositif de fixation (20) ;
une tige de soupape (40) comprenant :
une entrée (401) définie dans la tige de soupape (40),
une nervure de fixation (41) agencée sur une première extrémité de la tige de soupape (40),
une ouverture (44) formée sur une seconde extrémité de la tige de soupape (40), l'ouverture (44) formée sur la seconde extrémité de la tige de soupape (40) communiquant avec l'entrée (401), et
une colonne de guidage (45) s'étendant vers l'extérieur depuis un côté de l'ouverture (44), la colonne de guidage (45) ayant un diamètre inférieur à un diamètre de l'ouverture (44) et ayant une bague d'étanchéité (451) montée dessus ;
un corps (10) comprenant :
un segment d'écoulement de sortie d'eau (11) formé sur une première extrémité du corps (10) et configuré pour se connecter à un outil d'arrosage, et
une rainure de réception (101) configurée pour recevoir le dispositif de fixation (20) et la tige de soupape (40), la tige de soupape (40) communiquant avec le segment d'écoulement de sortie d'eau (11) du corps (10) ;
un dispositif de commande (60) pour un couplage avec un tuyau d'alimentation en eau, le dispositif de commande (60) comprenant :
une section de vissage (61) agencée sur une paroi extérieure du dispositif de commande (60),
une ouverture d'écoulement d'entrée (64) formée sur une section médiane d'une paroi intérieure du dispositif de commande (60), et
un épaulement (65) formé à côté de l'ouverture d'écoulement d'entrée (64) ; et
un dispositif d'ajustement (50) comprenant un orifice fileté (51) se vissant avec la section de vissage (61) du dispositif de commande (60) et se raccordant avec la colonne de guidage (45), dans lequel la nervure de fixation (41) de la tige de soupape (40) met en œuvre une retenue avec la nervure de maintien (21) du dispositif de fixation (20) de manière à limiter une rotation du dispositif d'ajustement (50) le long du corps (10).

2. Structure de commande selon la revendication 1, dans laquelle le corps (10) comprend :
une section de connexion (12) formée sur une seconde extrémité de celui-ci et configurée pour se raccorder avec le dispositif d'ajustement (50), et
un premier épaulement (13) et un second épaulement (14) qui sont définis sur une paroi intérieure de la rainure de réception (101), dans lequel le premier épaulement (13) vient en butée contre le dispositif de fixation (20), et de multiples évidements de verrouillage (15) sont définis sur le second épaulement (14) du corps (10) et sont configurés pour mettre en œuvre une retenue avec une pluralité de premiers blocs de mise en prise (31) du dispositif de retenue (30) respectivement.

3. Structure de commande selon l'une quelconque des revendications précédentes, comprenant en outre un dispositif de retenue (30) comprenant :
une première section de raccord (32) formée sur une première extrémité de celui-ci,
une nervure d'arrêt (33) formée sur la première section de raccord (32), et
une tranchée (34) définie sur une paroi intérieure du dispositif de retenue (30), dans laquelle un diamètre de la première extrémité du dispositif de retenue (30) est inférieur à une seconde extrémité du dispositif de retenue (30), et la tranchée (34) se verrouille avec une pluralité de seconds blocs de mise en prise (46) de la tige de soupape (40).

4. Structure de commande selon l'une quelconque des revendications précédentes, dans laquelle la tige de soupape (40) comprend :
une nervure de butée (42) s'étendant vers l'extérieur depuis une section médiane d'une paroi extérieure de la tige de soupape (40), et
deux premières bagues d'étanchéité (43) montées respectivement sur deux côtés de la nervure de butée (42).

5. Structure de commande selon l'une quelconque des revendications précédentes, dans laquelle le dispositif d'ajustement (50) comprend :
une section de couplage (52),
une face de mise en contact (53) s'étendant vers l'intérieur à partir d'une extrémité du dispositif d'ajustement (50),
une seconde section de raccord (54) s'étendant de manière adjacente à la section de couplage (52),
dans lequel un diamètre de la seconde section de raccord (54) est supérieur à celui de la section de couplage (52), et
un espace de logement (55) défini entre la section de couplage (52) et la seconde section de raccord (54).

6. Structure de commande selon l'une quelconque des revendications précédentes, dans laquelle le dispositif de fixation (20) et le dispositif de retenue (30) sont mis en adhérence avec les corps (10) d'une manière à liaison par ultrasons.

7. Structure de commande selon l'une quelconque des revendications précédentes, dans laquelle la nervure de retenue (21) est flexible.

8. Structure de commande selon l'une quelconque des revendications précédentes, dans laquelle l'ouverture (44) est séparée par une cloison en forme de croix sur la seconde extrémité de la tige de soupape (40).

9. Structure de commande selon l'une quelconque des revendications précédentes, dans laquelle la colonne de guidage (45) est conique.
